## Europäisches Patentamt

## European Patent Office

## Office européen des brevets

(19)

(11) Publication number: **0 014 598**

**A1**

(12) **EUROPEAN PATENT APPLICATION**

(21) Application number: **80300408.4**

(22) Date of filing: **12.02.80**

(51) Int. Cl.³: **A 23 N 7/02**

(30) Priority: **12.02.79 US 11391**
**12.02.79 US 11392**

(43) Date of publication of application:
**20.08.80 Bulletin 80/17**

(84) Designated Contracting States:
**AT BE CH DE FR GB IT LU NL SE**

(71) Applicant: **ATLAS PACIFIC ENGINEERING COMPANY**
**67th and Hollis Streets**
**Emeryville, California(US)**

(72) Inventor: **Amstad, John Heinz**
**1916 Sherrye**
**Plano, Texas 75074(US)**

(74) Representative: **Allen, William Guy Fairfax**
**J.A. KEMP & CO. 14 South Square Gray's Inn**
**London WC1R 5EU(GB)**

(54) Method of and apparatus for continuous surface treatment of produce.

㊄ A method of and apparatus for removing material from the surface of produce such as fruit and vegetables employs a rotating cage (4) defined by an annular array of rotatable rollers (6) provided with surfaces to remove such material and arranged vertically. In order to control the residence time of produce as it falls by gravity through the cage, and is centrifugally urged into contact with the rollers (6), there is provided a member to control residence time, this generally being a continuous or brush type auger (20) although in some embodiments residence is controlled by means of the rollers offering upwardly facing surfaces to resistance gravitational downward motion of produce.

./...

Croydon Printing Company Ltd.

Fig. 2.

– 1 –

DESCRIPTION

## METHOD OF AND APPARATUS FOR CONTINUOUS SURFACE TREATMENT OF PRODUCE

This invention relates to a method of and apparatus for continuous surface treatment of produce, that is to say the cleaning and/or peeling of fruits and vegetables, in particular but not exclusively potatoes.

A high processing rate with minimal waste and handling damage is important in the food processing industries, but attempts to accomplish this have presented difficult problems due to many factors, including the highly irregular surfaces of certain produce, such as potatoes, the substantial variation in optimum abrasive surface pressure, the susceptibility of some produce to handling damage, differences, in epidermis characteristics of different produce types and different species of the same type, the ever increasing difficulties in disposing of waste wash water and treating chemicals and the recent substantial increase in the cost of energy for producing steam, hot water or radiant heat for certain related operations.

- 2 -

While United States Patents  Nos. 3,134,413;  ,
3,566,942 and 3,946,658 disclosed devices which
relied upon tumbling produce in a generally
horizontal rotating cage constructed of
rotating abrasive spindles, a new concept was
presented in United States Patents Nos. 4,062,985
and 4,068,574 wherein the peeling cage
accelerated the produce to a rotary speed
sufficient to maintain it centrifugally contacting
against the spindle abrading surfaces.  This
greatly improved the potential cleaning and/or
peeling efficiency and allowed control of
produce pressure varying the cage speed.
Further, the new arrangement reduced the likelihood
of produce damage by substantially decreasing
tumbling.

However, some difficulty has been experienced
in accurately controlling the residence time of
the produce within the cage, while it was also
recognized that variations in the abrasive surface
of the cage spindles were desirable for optimum
utilization of the produce treating arrangement.

In one aspect the present invention provides
apparatus for removing material from the surface
of produce and separating the removed material
from the resultant mixture of produce and removed
material, said apparatus comprising a rotatable
drum-like cage with a vertical axis through which
the produce is fed, the periphery of the cage
being defined at least in part by a plurality of
rollers disposed in an annular array and having surfaces adapted to remove material from the surface of the produce and drive means for rotating the cage as a whole and the rollers of the cage,characterised by a residence control member provided within the cage, said member having an upper surface to resist and control the downward movement of produce being treated through the cage and increase the residence time of produce in the cage.

In another aspect the present invention provides a method of removing material from the surface of produce and separating the removed material from the resultant mixture of produce and removed material including the steps of urging said produce centrifugally into engagement with rollers disposed in an annular vertical array having surfaces adapted to remove material from the produce surfaces, and rotating the rollers independent of rotation of the array, characterised by the step of resisting and controlling the downward movements of produce within the array by means of a residence control member within the array which has an upper surface.

With the invention, careful maintenance of relative rotational speeds between the cage and residence control member, which is preferably an auger, produce a residence time within the cage is controlled in absence of appreciable interference with optimum produce treatment and with minimal produce tumbling.

- 4 -

The invention will be more clearly understood from the following description which is given by way of example only with reference to the accompanying drawings in which:

Fig. 1 is a perspective general view of one example of apparatus of the invention;

Fig. 2 is a vertical cross-sectional view through the apparatus of Fig. 1;

Fig. 3 is a horizontal plan view showing the top of the apparatus of Fig. 1 with produce being fed thereinto;

Fig. 4 is a horizontal cross-sectional view taken on the line 4-4 of Fig. 2 and showing a portion of the feeding funnel;

Fig. 5 is a horizontal cross-sectional view taken on the line 5-5, of Fig. 2;

Fig. 6 is a horizontal cross-sectional view taken on the line 6-6, of Fig 2, this showing a spindle driving member with broken portions revealing adjacent structure;

Fig. 7 is a horizontal cross-sectional view taken on the line 7-7 of Fig. 2;

Fig. 8 is a fragmentary cross-sectional view of the auger axle at the upper portion of the apparatus;

Fig. 9 is a fragmentary vertical cross-sectional view of a coaxial drive arrangement by which the cage, spindles and auger may be independently controlled;

Fig. 10 is a fragmentary, partially cross-sectional view on an enlarged scale, of a cage spindle of the type illustrated in Fig. 2;

Fig. 11 is a fragmentary cross-sectional view showing, on an enlarged scale, a portion of the spindle driving arrangement of Fig. 6.

Fig. 12 is a fragmentary, cross-sectional plan view schematically illustrating an adjacent pair of rotating cage spindle brushes engaging a potato supported by an auger flight;

Fig. 13 is a horizontal cross-sectional view through a modified form of treating cage;

Fig. 14a is a fragmentary side elevation of the structure of Fig. 13;

Fig. 14b is fragmentary side elevation, on an enlarged scale, showing a portion of the mating spindles of Fig. 14a;

Fig. 14c is a fragmentary side elevation showing a further modified form of treating cage;

Fig. 15 is a horizontal cross-sectional view through a further modified form of treating cage;

Fig. 16 is a fragmentary side elevation of the structure of Fig. 15;

Fig. 17 is a fragmentary perspective view showing a further modified form of treating cage;

Fig. 18 is a fragmentary side elevation of the structure of Fig. 17;

Fig. 19a is a fragmentary side elevation illustrating an additionally modified cage spindle arrangement;

Figs 19b and 19c are fragmentary side elevations similar to Fig. 19a and showing an elongated potato sequentially rotating from a position resting generally horizontally on the auger flight (Fig. 19b) to a vertical orientation (Fig. 19c) where it fits in the pocket between adjacent spindles;

Fig. 19d and 19e are sequential fragmentary side elevations similar to Figs. 19b and 19c but showing use of a cylindrical brush spindle adjacent a spiral spindle;

Fig. 20 is a fragmentary horizontal cross-sectional view through a cage illustrating further the arrangement of Fig. 19;

Fig. 21a is a fragmentary side elevation showing a modification of the structure in Figs. 19a and 20;

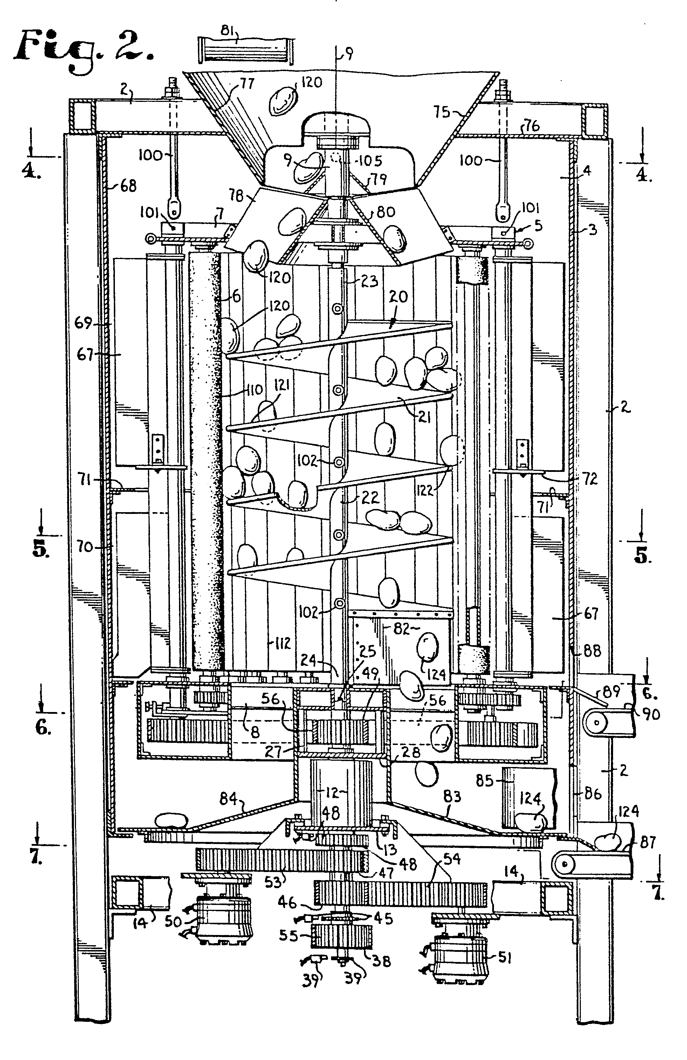

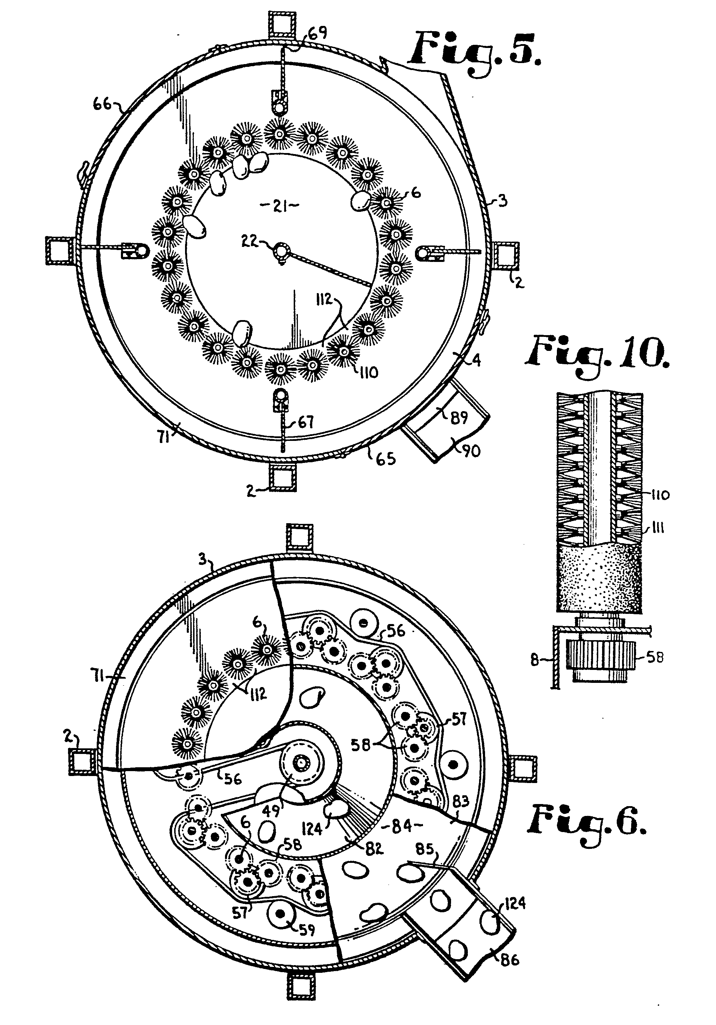

Fig. 21b is a fragmentary side elevation showing a modified spindle cage arrangement utilizing the

0014598

- 7 -

cylindrical treating cage spindles of Figs. 2 and 5 in combination with the retaining bars of Fig. 21a;

Fig. 21c is a fragmentary horizontal cross-sectional view further showing the arrangement of Fig. 21b;

Fig. 22 is a fragmentary horizontal cross-sectional view through a cage, further illustrating the structure of Fig. 21a;

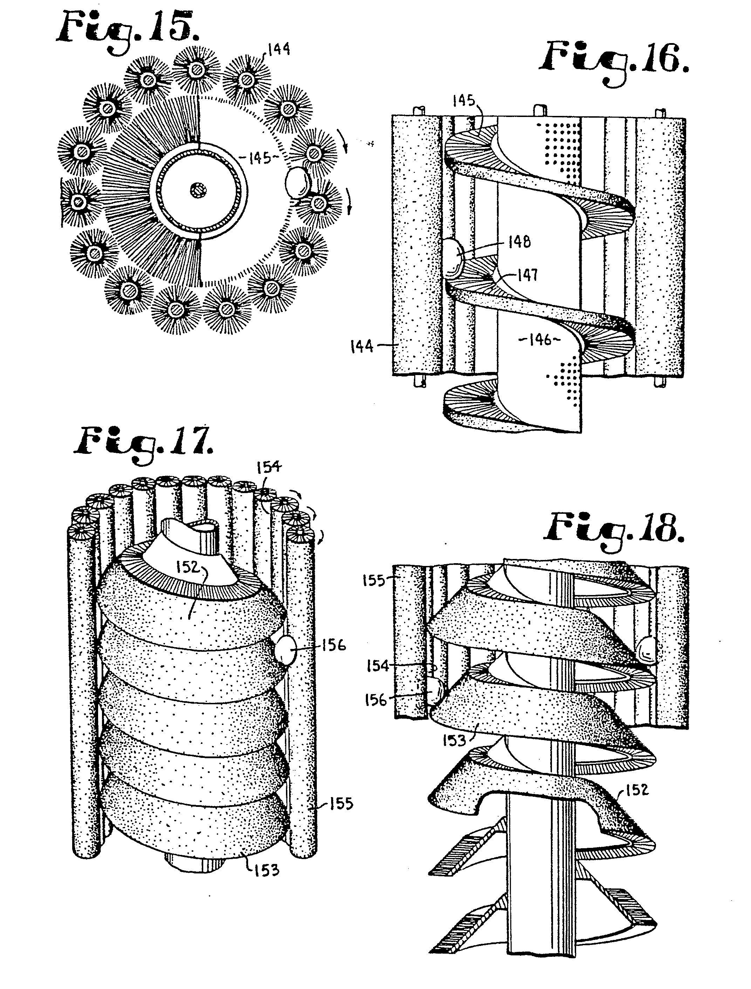

Fig. 23 is a fragmentary cross-sectional detail illustrating the brush flight of the central member of Figs. 15 and 16;

Fig. 24a is a fragmentary side elevation showing a modified form of plain flight  auger;

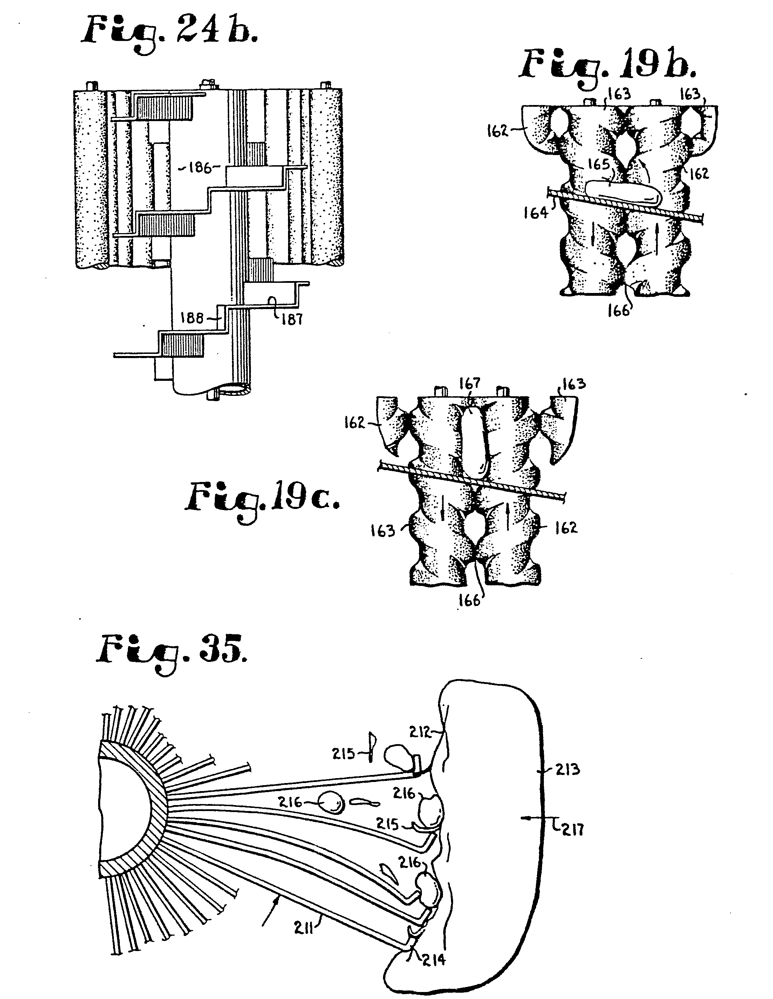

Fig. 24b is a view similar to Fig. 24a but showing a further modified form of plain flight auger;

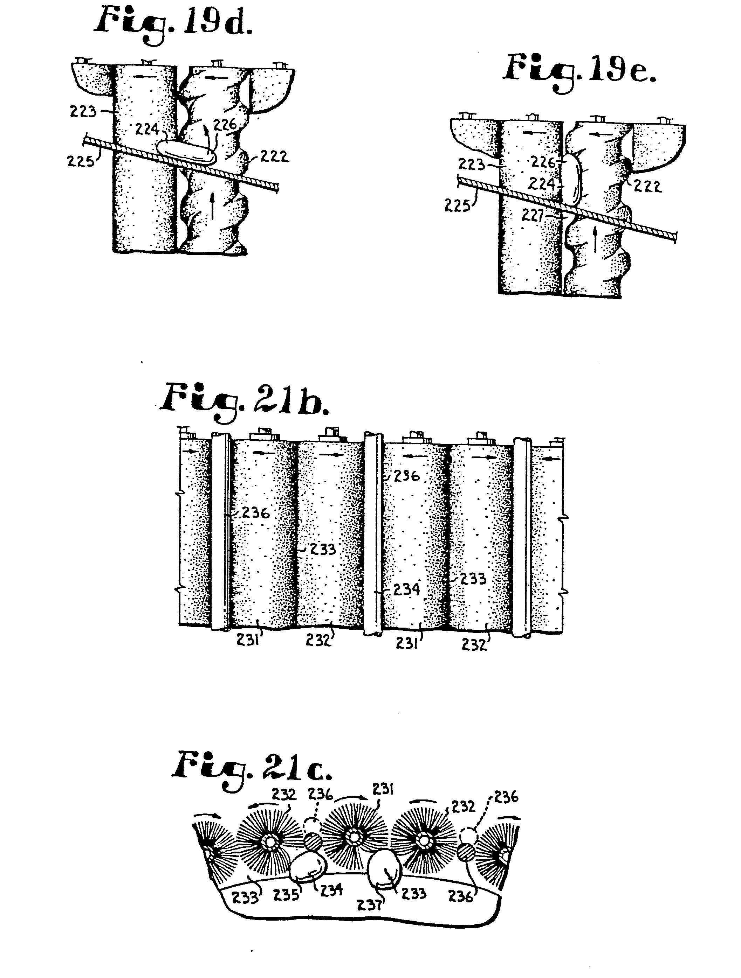

Figs. 25 through 31 are fragmentary cross-sectional views of individual cage spindles, illustrating various bristle configurations;

Figs. 32, 33 and 34 are fragmentary views, on a greatly enlarged scale, illustrating selected variations in specific bristle form.

Fig. 35 is a fragmentary, somewhat schematic cross-sectional view showing footed cage spindle bristles, in use;

Fig. 36 is a side elevation of the treating apparatus showing an air evacuation duct communicating with the cage;

Fig. 37 is a side elevation similar to Fig. 36 but showing the air evacuation system divided into upper and lower sections;

Fig. 38 is a fragmentary view of a fast cutting cage spindle.

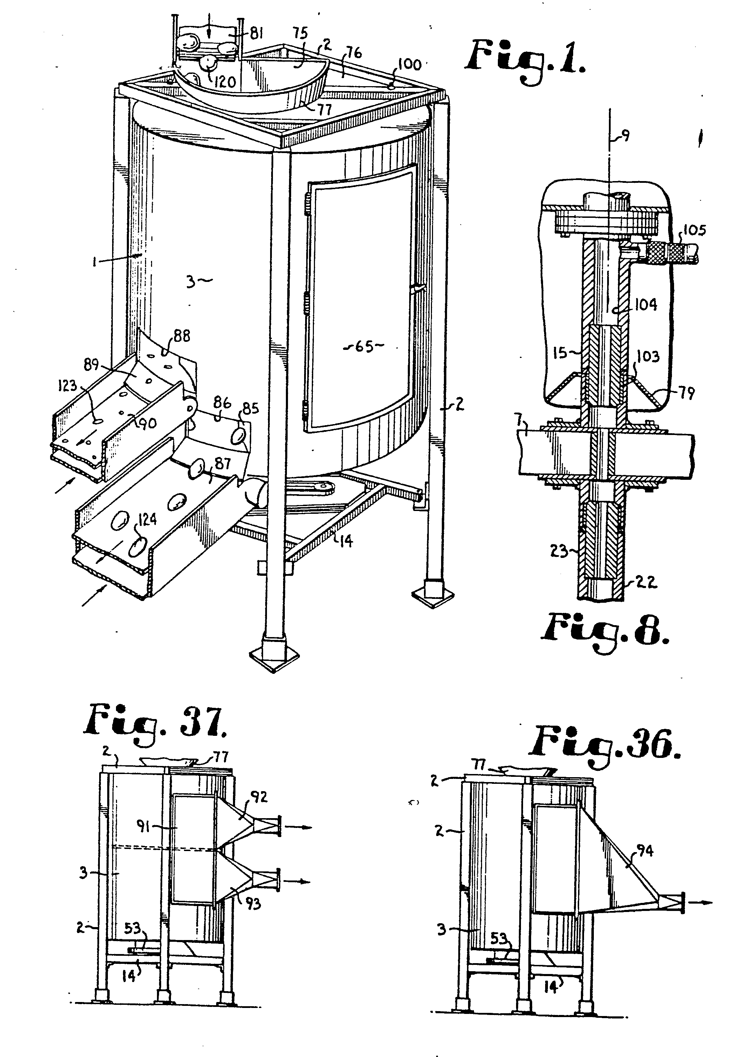

The reference numeral 1, Fig. 1, generally designates apparatus for cleaning and/or peeling vegetables and fruit, herein called "produce", such as potatoes, carrots, beets, onions, etc. continuously at high production rates.

The apparatus 1 includes a support frame 2 for a housing 3 having therein a treating chamber 4 shown in Fig. 2. The chamber 4 contains a vertically oriented treating cage 5 defined, in this example, by a plurality of elongate rollers or spindles 6 maintained axially parallel and circumferentially spaced, as best shown in Figs. 2 and 5. The spindles 6 are rotatably mounted at opposite ends thereof on upper and lower radial bearings 7 and 8 which extend inwardly toward the cage axis 9. The treating cage 5, through the lower bearing mount 8, is rotatably supported by bearings 10 and 11 contained in a bearing housing 12 secured on a mounting plate 13 forming a portion of a drive assembly support 14. The cage upper bearing mount 7 is rotatably supported by an appropriate bearing structure 15 as shown in Fig. 8.

As shown in Fig. 2, a screw or auger 20 is
contained coaxially within the treating cage 5.
This comprises flights 21 which present a smooth,
continuous, helical, metallic upper surface.
If desired this surface may be softened by a
layer of an appropriate resilient material with
or without abrasive characteristics (not shown).
The flights 21 extend into contact, or just short
of contact,with the spindles 6 and preferably slope
radially outwardly and downwardly so that items
thereon gravitate into contact with the spindles.

The flights 21 are secured on a central axle or
shaft 22 which, at the upper end 23 thereof, is
rotatably mounted with respect to the cage upper
bearing mount 7 as shown in Fig. 8. Fig. 9 shows
the lower end 24 of the shaft 22 terminating with
a coupling driving key slot 25 and bearing upon the
collar of a sleeve bearing 26 on which the downward
weight of the auger is supported while permitting
rotation thereof. The sleeve bearing 26 is received
in a structural mounting assembly 27 which forms
part of the treating cage lower bearing mount 8.
The lower bearing mount 8 also includes a support
plate 28 which is secured to a relatively large,
hollow cage drive shaft 29 which extends downwardly
through the bearing housing 12.

Contained within the cage drive shaft 29, and also
within the bearing housing 12, is a hollow spindle
drive shaft 30 supported on an upper bearing 31, received in the cage drive shaft 29, and engaging a lower bearing 32 also secured in the cage drive shaft 29. Contained coaxially within the spindle drive shaft 30 is an auger drive shaft 33 which is rotatably retained at its upper end 34 by being telescopically received in the sleeve bearing 26 and, at a lower portion 35 by resting on and extending through a bearing 36 secured with respect to the lower end 37 of the spindle drive shaft 30. The auger drive shaft 33 extends downwardly beyond the bearing 36 and has secured thereto an auger drive pulley or socket 38 and the rotating portion of a speed sensor signal generator 39. The upper end 34 of the auger drive shaft 33 terminates in a key projection 40 which is received in the key slot 25, whereby the auger 20 may be independently rotatably driven from the drive pulley or socket 38.

The spindle drive shaft 30 has the rotating portion of a speed sensor signal generator 45 fixed thereto above the auger drive pulley 38. Spaced above the generator portion 45 and also secured to the spindle drive shaft 30 is a spindle drive pulley or sprocket 46. Over the spindle drive pulley 46, in this example, is a cage drive pulley or sprocket 47 which is fixed to the lower portion of the cage drive shaft 29, the shaft 29 also supporting the rotating portion of a cage speed signal generator 48. Progressing upwardly along the coaxially shafts 29, 30 and 33, past the bearing housing 12 and beyond the cage support plate 28, is a drive pulley or sprocket 49 secured to the spindle drive shaft 30, whereby rotation of the spindle drive pulley 46 leads

to rotation of the pulley 49.

Referring to Figs. 2 and 7, the drive assembly support 14 supports three hydraulic motors designated 50, 51 and 52, these motors having respectively a timing belt 53 engaged with the cage drive pulley 47, a timing belt 54 engaged with the spindle drive pulley 46 and a timing belt 55 engaged with the auger drive pulley 38. The drive pulley 49 on the upper portion of the spindle drive shaft 30 engages a timing belt 56 which, in turn, is threaded in serpentine fashion about the cage lower bearing mount 8, engaging drive sprockets 57 which drive respective pairs of gears 58 secured to the lower ends of the treating spindles 6, Figs. 2, 6 and 11. Suitable idlers 59 guide the timing belt 56 through the proper path for simultaneous engagement with each of the drive sprockets 57.

Thus, by separately controlling the output of the hydraulic drive motors 50, 51 and 52, the cage 5, the treating spindles or rollers 6 and the auger 20 may be rotated about their own axes independently at selected relative speeds and directions. The hydraulic pumps and related fluid transmission tubing connected to the hydraulic motors 50, 51 and 52 are conventional and not shown.

The housing 3, in this example, is cylindrical in shape and has hinged doors 65 and 66 mounted on the curved side wall thereof, see Figs. 1 and 4, to provide convenient access to the treating spindles 6. Upon removal of one or more of the spindles 6,

- 12 -

the auger 20 and adjacent internal structure can be exposed for inspection and service.

Resilient flaps or wipers 67 are suitably mounted on the treating cage 5 and function to keep the interior surface 68 of the housing 3 clear of debris.

In the example of Fig. 2, the chamber 4, defined by the housing 3, is divided into an upper portion 69 and a lower portion 70 by an annular ledge 71 secured to the housing interior surface 68. Likewise, the treating cage 5 carries a ring divider 72 which cooperates with the ledge 71 for the same purpose.

A feed chute 75 is supported by the frame 2 and projects downwardly through the upper wall 76 of the housing 3. The chute 75 has a stationary upper portion 77 in the shape of a spiral funnel tapered inwardly in the downward direction, and a lower rotary accelerator portion 78 which is secured to and rotates with the treating cage upper bearing mount 7. The feed chute lower portion 78 has downwardly and outwardly sloping conical caps 79 and 80 which serve to deflect incoming produce radially outwardly against the treating spindles 6 within the cage 5.

An appropriate conveyor 81 is positioned over the feed chute 75 so as to discharge produce for treatment thereinto.

The bottom flight of the auger 20 has a resilient wiper flap 82 associated therewith which helps guide treated produce leaving the auger into a rotating exit chamber 83 partially formed with a conical wall 84 tending to urge produce radially outwardly within the chamber 83. Such urging, in addition to centrifugal force still acting upon the produce, will cause movement towards the periphery of the exit chamber 83 where the produce strikes a stationary deflector 85. This deflector 85 guides the produce through an opening 86 in the side wall of the housing 3, and onto an appropriate conveyor 87 by which the treated produce is carried away.

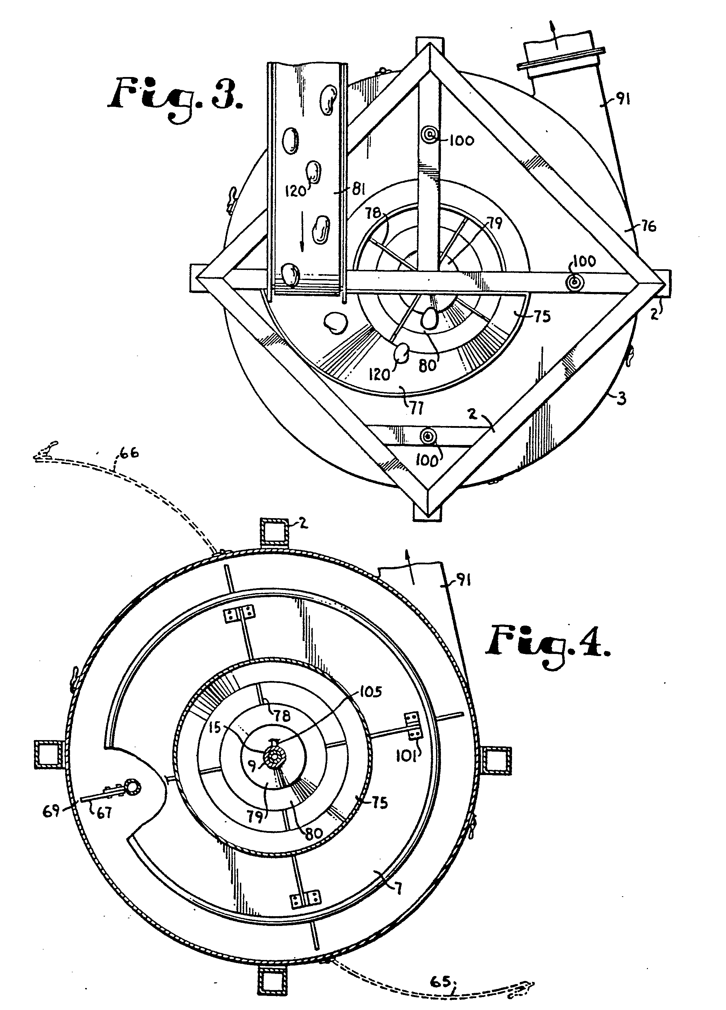

The peelings and debris which pass between the spindles 6 to the radially outer part of the chamber lower portion 70 are maintained in motion by the lower flaps or wipers 67 and find their way through an opening 88 in the housing 3 where they slide down a ramp 89 onto an exit conveyor 90. Any light particles or pieces removed from the produce and ejected to the exterior of the treating cage within the chamber 4 are preferably withdrawn by air suction through an exit duct 91 (Fig. 3) which also communicates through the side wall of the housing 3. In the embodiment shown in Fig. 2 where the chamber 4 is divided into upper and lower portions 69 and 70, the duct 91 may also as shown in Fig. 37 be divided into an upper portion 92 and lower portion 93 to segregate the initially removed debris, which is more likely to be composed of waste material such as soil, and the later removed material which is more likely to be salvageable into animal feed or other protein-rich products.  If such segregation is not desired, the entire duct 91 may be fed into a single exit 94 as in Fig. 36.  Appropriate suction fans with collecting hoppers (not shown) can be utilized to create an air flow through the chamber 4 and convey the withdrawn material.

As noted above, the weight of the cage 5 is supported by a bearing structure within the housing 12, which is supported by the drive assembly support 14.  In servicing the drive assembly, it is not necessary to first disassemble the cage and associated structure.  Hangers 100 are suspended from the frame 2 and are normally elevated to a point where they do not interfere with the rotation of the cage.  However, when it is desired to remove the drive assembly support 14 and structure mounted thereon, the hangers 100 are lowered and engaged with suspension ears 101 on the cage upper bearing mount 7, whereby the cage may be suspended within the housing 3 while the drive assembly support 14 and associated structure is withdrawn downwardly for easy access thereto.  In withdrawing the drive assembly support downwardly, the telescopic connection between the projection on the auger drive shaft 33 and key slot 25 on the lower end of the central axle 22 separates and may be later re-engaged merely by alignment and axial reinsertion.  After replacing the drive assembly, the hangers 100 are disconnected from the upper  bearing mount 7 and raised to a non-interferring position, as in Fig. 2, until again needed.

One of the significant advantages of the described apparatus is its ability to normally function in absence of flushing liquid. However, occasionally it may be desirable to introduce liquids into the chamber 4 for cleaning and/or, sterilization of the apparatus, or under special conditions, such as the need for produce preservation and/or surface treatment. For this purpose the central axle or shaft 22 supporting the auger 20 is hollow and has a series of selectively usable spray nozzles 102 spaced therealong. The hollow interior of the axle 22 communicates through a rotary seal 103 with the stationary bearing structure 15, which has a hollow interior 104 opening into an appropriate hose connection 105, of Fig. 8.

In the example of Fig. 2, the treating spindles 6 are in the form of "straight" brushes which each present a cylindrical abrasive surface 110. The resilience, diameter and length of the individual bristles 111 may vary considerably. However, operable bristles made of "6-12" Nylon (Du Pont Company, Wilmington, Delaware) between .035 and .045 cms in diameter and about 3.2 cms in length appear to be satisfactory for removing the dirt and skin from several types of common potatoes. Substantial variations in bristle characteristics, patterns and shapes may be utilized for particular operations, and some examples are discussed below.

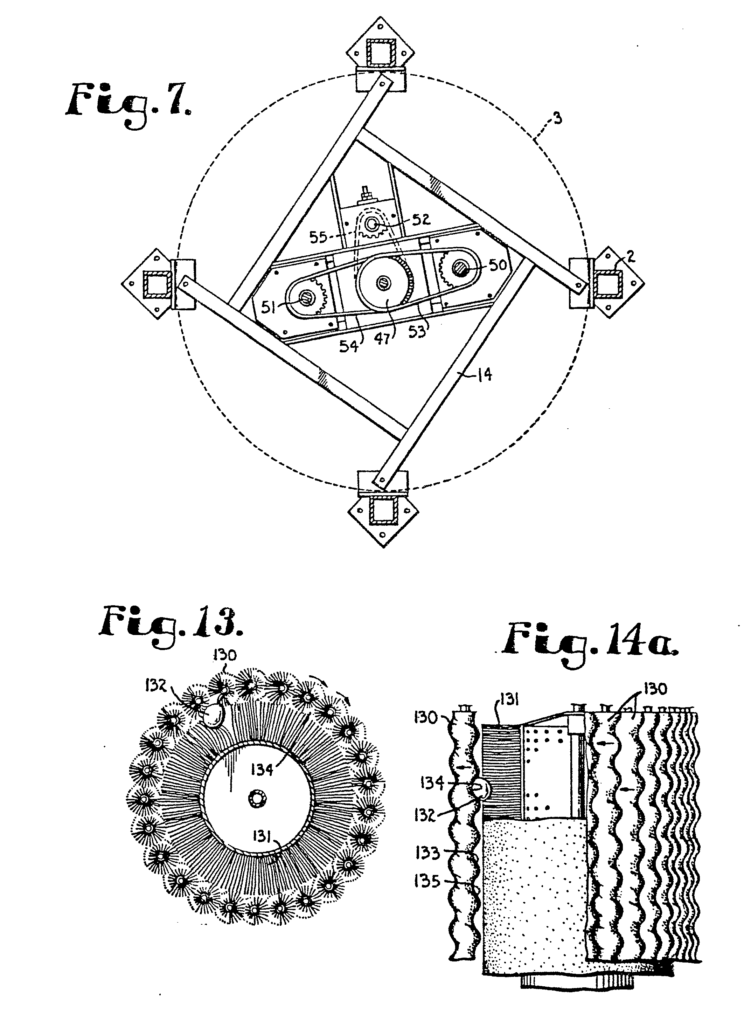

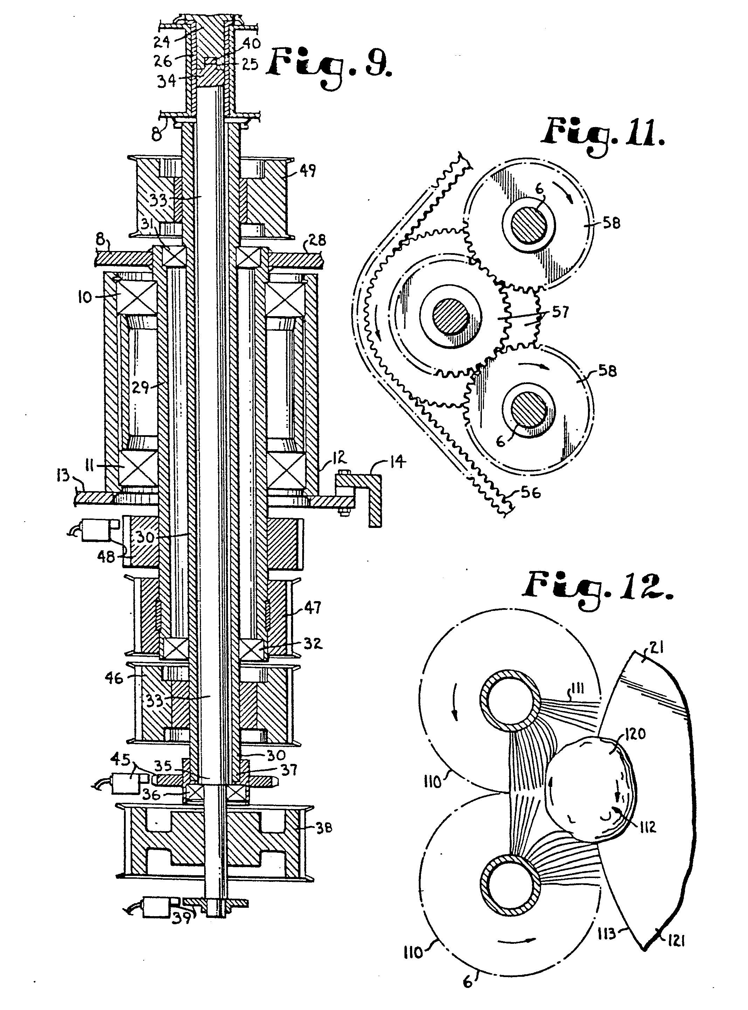

The apparatus shown in Fig. 2 is arranged so that the respective treating spindles 6 co-rotate, that is, adjacent spindles rotate in the same direction, at the same or different speeds. Referring to Fig. 11, this can be accomplished by driving sprockets 57 which are associated with gear teeth meshing with gears 58 (which may be of different diameters) secured to the treating spindles 6. The elongated pocket 112 (Fig. 12) formed between adjacent spindles 6 may receive produce whereupon the bristles, due to such co-rotation, induce spinning of the produce about a generally vertical axis while the brushing takes place. The periphery 113 of the auger flight 21 is positioned so as to touch or be adjacent the abrasive surfaces 110 formed by the bristles 111.

In operation, the cage 5, which has an upwardly directed axis 9, is rotated at a speed sufficient to maintain produce in continuous, centrifugal contact with the abrasive material removing surface 110, but insufficient to prevent downward movement of the produce within the cage under the force of gravity.

Produce, in this example unpeeled, untreated raw and dirty potatoes 120, are introduced by means of the conveyor 81 into the feed chute 75 whereby they are directed downwardly into the chamber 4. The produce contacts the conical caps 79 and 80 by which they are deflected against the interior treating spindle surfaces 110, while being rotatably accelerated by the accelerator lower portion 78 of the feed chute of Fig. 3. Some of the produce may not immediately reach the abrasive surfaces 110 because of interference with other produce in the area, whereupon they will usually, instead, contact an inner portion of the uppermost flight of the auger 20. The produce will then tend to roll outwardly and seek contact with an available treating area of the abrasive surfaces 110.

Since the inner surface of the cage defined by the spindles is irregular due to the elongated cavities 112 formed between the spindles, the potatoes are quickly engaged and accelerated into a circular path of rotation approximately equal to the circular rotational path and speed described by the inwardly facing portions of the surfaces 110. This path and speed are sufficient to maintain the produce in continuous contact with the surfaces 110, but insufficient to prevent downward movement of the produce within the cage under the force of gravity. Thus, without the auger 20, the produce 120 would slide or migrate downwardly at less than the free fall speed, but at a greater speed than may be desired for optimum time exposure to the treating spindles.

If the auger 20 were rotated at the same speed as the treating cage there would be little opportunity for the produce to move downwardly through the treating cage, except for precession, assuming that the auger lead, spindle and cage rotation directions are compatible. However, some relative rotation between the auger 20 and the cage will cause the auger to "screw" with respect to the cage, whereby the auger flight position continually moves axially along the spindle cavities 112. For example on rotating the treating cage at 130 rpm counter-clockwise, with a cage having an effective diameter of 76 cms, gives a centrifugal force of about seven "g". If an auger, with a four flight, right hand lead is rotated at 146 rpm counter-clockwise, (assuming no precession) a differential rotational speed of 16 rpm counter-clockwise is created in a direction which causes the auger flights to apparently screw or displace downwardly at a rate whereby the produce will have a cage residence time of about 15 seconds. Of course, if there is precession caused by cage spindle rotation, an appropriate adjustment in the differential rotational speed between the cage and auger must be made to obtain the desired residence time.

Thus, the flights 21 form an elongated spiral supporting surface which resists the gravitational motion downward of the produce through the cage by contact thereof on the upper surface 121. This increases the cage residence time according to the difference in rotational speed between the auger 20 and the treating cage 5. By reason of such relative rotation, the point of contact 122, Fig. 2, between the produce and the auger surface 121, which continually changes due to the relative motion between the auger and the produce, is displaced downwardly in a controlled manner. This occurs while the produce is maintained against the abrasive surface 110 with a pressure accurately maintained by the centrifugal force arising from rotation of the cage 5. Additionally, modifications in cleaning and/or peeling conditions in the cage may be produced easily by independently varying the speed of rotation of the individual spindles through the hydraulic motor 51 which, through the spindle pulleys 46, 49 and spindle drive shaft 30, controls the rotational speed of the spindles independently of cage and auger rotation.

When the apparatus is in operation under a full load, certain produce pieces being treated will necessarily rest upon other produce pieces rather than directly upon the upper flight surface 121. However, the descent of such stacked produce will still be governed by the effective downward displacement of the flight contact point. For most efficient operation, the apparatus will normally not be loaded beyond the point where each produce piece in the treating cage 5 can easily find an exposed area of abrasive surface 110 to bear against. Once the produce piece has found its position against the abrasive surface, whether or not it directly contacts the flight surface 121, and notwithstanding some precessing or jumping between cavities 112, the conditions are not created where there is considerable tumbling of the produce, one over the other, which is a common and undesirable feature of previous apparatus.

As the produce is abraded or brushed , particles 123 removed therefrom become independently subjected to the centrifugal force within the cage 5 and rapidly find their way between adjacent treating spindles 6 to the exterior of the cage. However, the particles are contained within the interior of

- 20 -

the housing 3, from which they are withdrawn either
by air suction through the exit duct 91 or discharged
through the opening 88 onto the exit conveyor 90,
for processing.

The respective speed sensor signal generators 39, 45
and 48 are connected to appropriate meter displays
(not shown) whereby operating parameters may be
continually monitored.  The cleaned and/or peeled
produce 124 drop off the lowermost turn of the
flight from which they fall into the exit chamber 83,
aided if necessary by the wiper flap 82, and strike
the stationary deflector 85  whereupon they  are
urged through the opening 86 onto the conveyor 87
for transfer to further processing or packaging
apparatus.

Many variations may be provided in the basic apparatus
and method for producing changes in cleaning and
peeling conditions to better suit specific types of
produce.

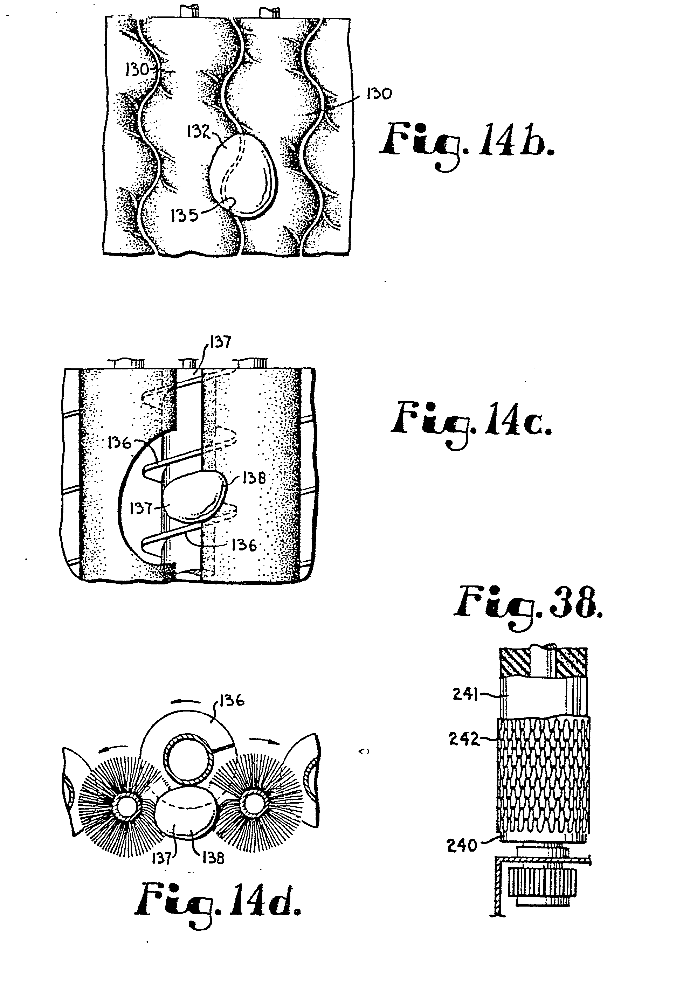

One variation relates to the shape of the treating
spindles and is illustrated in Figs. 13, 14a and 14b,
which show modified brush treating spindles 130
which are formed into a spiral configuration of the
same hand and which intermesh.  This allows
formation of an unperforated treating cage wall,
except for slight lateral clearance to avoid
excessive interference between adjacent spindles.
In co-rotating the respective spindles, that is,
rotating them all in the same direction, there is a
downward ridge or flight displacement over the entire inner surface of the cage. By substituting for a central screw member, such as the auger 20, a "straight" brush 131, the produce 132 will be urged against the interior cage surface 133 and maintained thereagainst under the centrifugal force produced by accelerating the produce 132 to the cage rotational speed.

The produce 132 will tend to enter a pocket 134 on a spindle 130 and between adjacent meshed spindles 130. The produce, thus, will be simultaneously acted upon by the abrasive surface of adjacent spindles 130 as well as the abrasive surface presented by the central brush 131 which rotates relative to the cage. The produce is restrained against gravity induced downward motion within the cage by the lower flight or flights 135 of the pocket 134 within which the produce is cradled or nested, Fig. 14b. The rotation of the spindles 130 will, in this case, determine the downward displacement of the produce 134 within the cage, thus controlling the cage residence time while the produce is being treated.

A variation of this modification illustrated in Fig. 14c wherein adjacent spindles are spaced-apart with an auger type screw spindle between them. This screw spindle has a thin screw flight 136 engaged with the bristled treating spindles. The bristles of the treating spindles extend into a space 137 between the flights to engage produce 138. The treating spindles can be rotated independently of the screw spindles for controlling the produce cage residence time. This variation may be used with or without a central brush such as brush 131 (Figs. 13 and 14a).

Another modification is illustrated in Figs. 15, 16 and 23 wherein the cage treating spindles 144 are similar to those described in connection with the embodiment of Fig. 2, but the center gravity drop resisting member takes the form of a brush auger 145. In this embodiment the auger bristles project generally radially from a central rotating support 146 in a spiral pattern, producing an upper flight surface 147 which functions not only to contact the produce 148 for controlling the descent thereof through the treating cage, but also to provide additional brushing or abrading. It is noted that the flight surface 146 is formed into a left hand spiral which is opposite to that of the Fig. 2 auger. Relative rotational directions will, therefore, also be opposite for similar function.

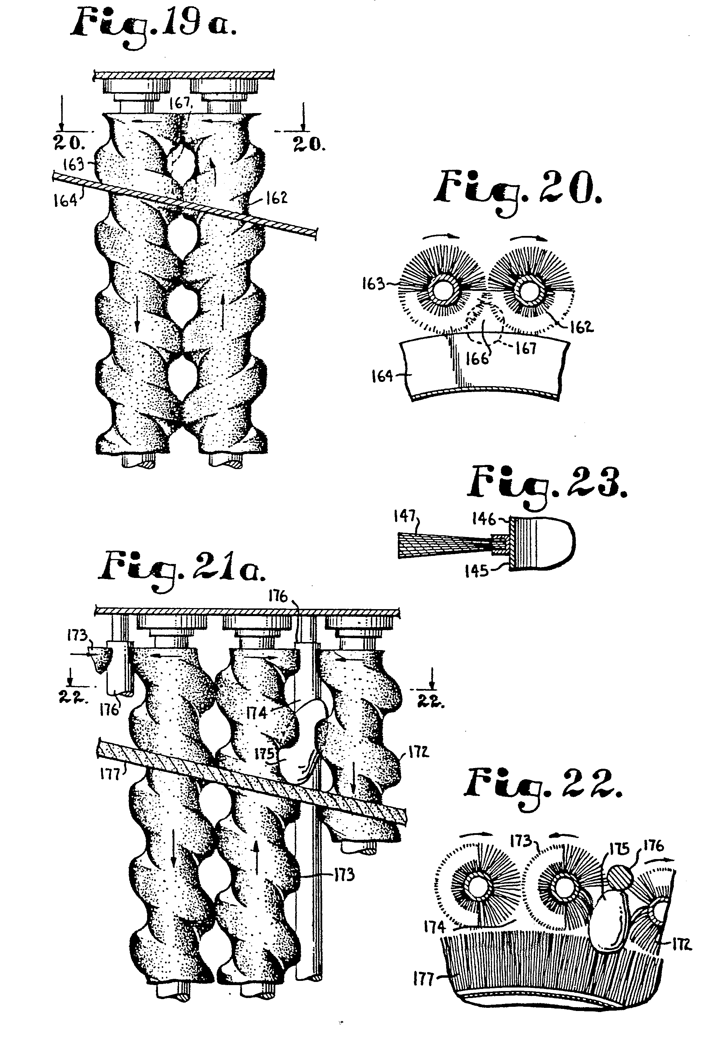

Figs. 17 and 18 show a further modification which is somewhat similar to that of Figs. 15 and 16. In this case, the central brush auger 152 has an upper flight surface 153 sloping outwardly and downwardly providing a wedge pocket 154 between the surface 153 and the cylindrical surface brush treating spindles 135. The produce 156 normally becomes wedged in the pocket 154, thereby being more completely exposed to relatively moving abrading surfaces during travel through the treating cage. The brush auger 152 functions otherwise in the same manner as described in connection with the embodiments of Figs.

- 23 -

2 and 16.

A further modification is shown in Figs. 19a, 19b, 19c and 20. Adjacent treating spindles 162 and 163 again of spiral shape but of opposite hand rotate in the same direction. The auger flight 164 functions as in previously described embodiments. This structure is particularly suitable for produce 165, Fig. 19b, of elongated configuration such as Russett potatoes which often assume a cucumber-like shape. Such produce might tend to lie flat on the auger flight 164 so that it would not be subjected to complete abrading surface contact and rotating action.

When centrifugal force urges the produce 165 against the spindles 162 and 163, the flight on the spindle 163 tends not only to abrade the produce in the direction of spindle rotation, but also urge a portion of the produce downwardly against the auger flight 164. The adjacent spindle 162, however, tends to urge the produce upwardly so that the produce will quickly be upended and received in a pocket 166 with its axis generally parallel to the axis of the spindles, as shown at 167, Figs. 19 a and 19c. The produce will tend to stay in this position during residence in the cage, with the respective spindles 162 and 163 making abrading passes while the produce is turned on its axis and controlled as to descent speed by the auger flight 164.

Figs. 21a and 22 show a modification of the

- 24 -

structure of Figs. 19a and 20. Here adjacent
spindles 172 and 173 are spiral with the same hand
but rotated in opposite directions to produce a
similar produce lifting and turning effect. However,
alternate pairs of adjacent spindles will both
rotate so as to tend to draw produce out of the
cage, causing damage thereto or, under some
circumstances, ejection through the cage wall.
To prevent this, a retaining bumper rod 176 is placed
between the counter rotating spindles 172 and 173
in a position which will maintain the produce 175
in efficient abrading relationship with the
spindle brushes.

For improved efficiency, it may be desirable to
permit the rod 176 to freely rotate so as not to
inhibit the rotation of the produce 175 in the
pocket. Under other conditions, it may be
advantageous to drive the rod 176 about its axis.
The auger flight 177, in this case is formed of
elongated brush bristles and functions as described
in connection with Figs. 15, 16 and 23.

As with the other embodiments described herein,
since there are complex force producing, multiple
contacts with the produce, the produce may not
stay within the same spindle cavity during its
entire residence time in the cage, but, rather,
tend to jump from cavity to cavity, the result
being an even cleaning and/or abrading treatment
over the entire produce surface.

Referring to Fig. 24a, another modified residence time controlling member is indicated by the reference numeral 182. This is an auger similar to the auger 20 of Fig. 2 but the spiral flights 183 thereof have spaced vertical steps 184 to promote agitation and turning of the produce.

Fig. 24b shows an auger 186 somewhat similar to the auger of Fig. 24a, but further modified in that the spirally sloping flight portions are eliminated and the entire flight is made up of generally horizontal steps 187 and vertical steps 188. With such constructions, in addition to controlling residence time, there is also a tendency gently to promote turning of the produce about several axes, so as to better ensure even, whole surface treatment, without harsh tumbling.

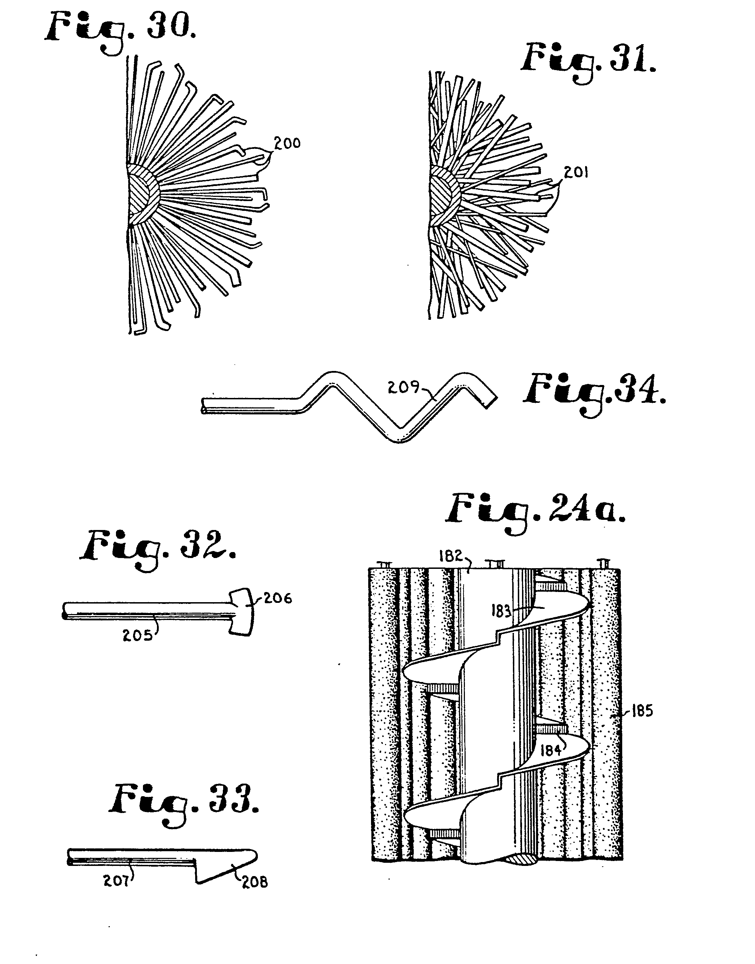

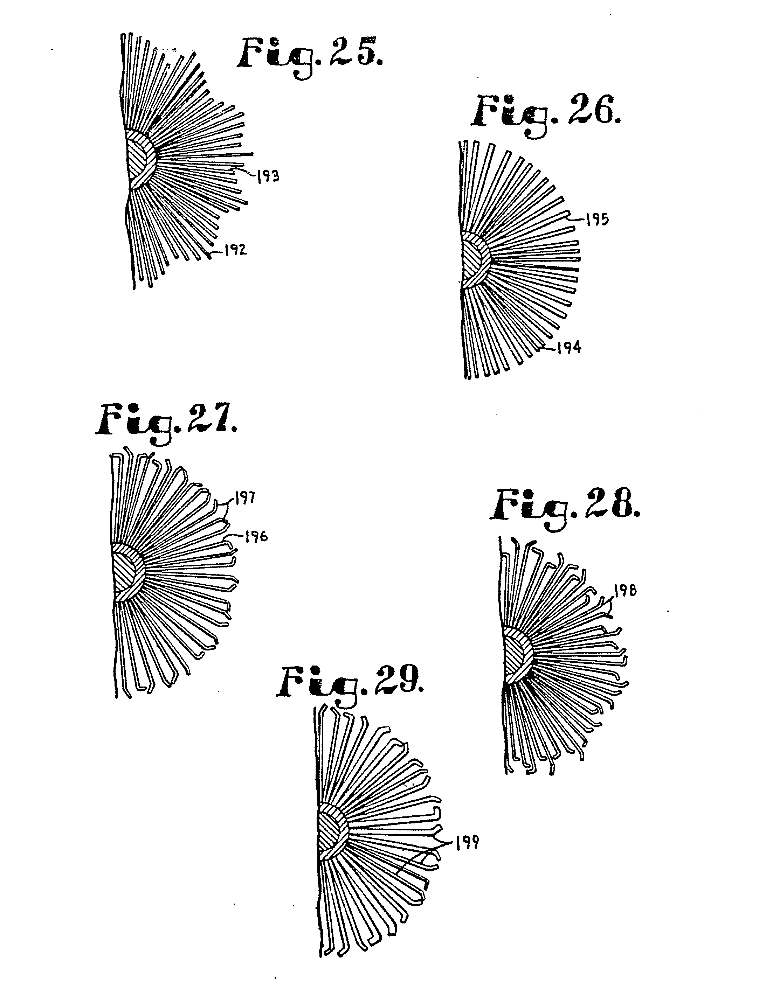

The bristle configuration chosen for the abrading brushes can have a notable effect upon the type of surface treatment provided. Figs. 25-31 show various bristle patterns and shapes. Fig. 25 shows the use of radially projecting uniform diameter bristles of varying radial length, which promotes produce rotation and helps to abrade uneven surfaces. Fig. 26 shows bristles of varying diameter, and therefore varying resilience, but of equal radial length. Fig. 27 shows bristles 196 having their free ends bent to form feet 197 to aid entrance into produce surface cavities for digging and sprying out dirt. Fig 28 shows a combination of the features of Fig. 27 wherein the bristles 198 are of both varying length and have their free ends bent. Fig. 29 combines the features of Figs. 26 and 27

- 26 -

whereby the bristles 199 are of different thickness, and therefore of differenct resilience, and yet have the free ends bent into foot portions. Fig. 30 combines the features of Figs. 25, 26 and 27 in that the bristles 200 display variations in radial length and diameter, while selected bristles have the free ends bent into foot portions. Fig. 31 demonstrates another variation which combines the features of Figs. 25 and 26, but modified in that the bristles 201 project at angles from the radial.

Fig. 32 shows a bristle 205 having a hammer-shaped free tip 206 thereon for less "poking" but a greater scraping action. Fig. 33 illustrates a bristle 207 having a barb shaped tip 208 which is efficient in partially digging into the produce surface and hooking a particle of debris for withdrawal. Fig. 34 demonstrates a bristle 209 of crinkly or zig-zag configuration which continuously presents an angled end regardless of wear.

Fig. 35 somewhat schematically illustrates bristles 211 abrading the surface 212 of an item of produce 213. In this example the bristles 211 terminate in feet 214 which flake off particles 215 of the produce epidermis, and also dig out and dislodge dirt particles 216 embedded in the surface under treatment. This is accomplished while the produce 213 is urged radially outwardly of the cage axis under centrifugal force, in the direction indicated by the arrow 217.

In the embodiments described above in connection with Figs. 19a, 19b, 19c and 21a, all the treating spindles are spiraled. A useful variation of this concept is shown in Figs. 19d and 19e wherein a spiral or screw brush spindle 222 is adjacent one or more straight or cylindrical brush spindles 223, the respective spindles being rotated in the same direction and the spindle 222 having a hand such that it "screws" upwardly. With this configuration, elongated produce, which sometimes rests flat on the auger flight 225, tends to have one end 226 urged in a vertical direction. The end 226 is thereby raised with respect to the auger flight 225, whereupon the produce 224 is more likely to drop into the cavity 227, where it is exposed more fully to the treating surface as above described.

Counter-rotating spiral or screw spindles in combination with cavity retaining rods were described in connection with the embodiment of Figs. 21a and 22. Such retaining rods may also be utilized to advantage in connection with "straight" spindles of the type utilized in the example of Fig. 2. Figs. 21b and 21c show straight counter-rotating adjacent brush spindles 231 and 232 which form cavities of two types. A first cavity 233 brushes inwardly toward the axis of the cage, a second cavity 234 brushes outwardly and tends to catch or swallow and damage produce 235 unless a bumper or rod 236 is supplied. As in the embodiment of Figs. 21a and 22, the rod 236 may be fixed, free to rotate on its axis, or driven

- 28 -

to help promote the rotation of produce in the cavity 234. Produce 237 in the inwardly brushing cavity 233 is also subject to the desired abrasion but is normally less stable since the produce is urged radially inwardly against the centrifugal force of the spinning cage. Thus, a portion of the produce pieces within the cage are always in a relatively unstable state, thereby promoting complex movement thereof with attendant full surface treatment.

Also desirable in connection with cavity retaining rods is a facility for radial adjustment so as to retain the produce deeper or shallower in the spindle cavity, as needed. Such an adjustment is illustrated in Fig. 21c where typical alternative positions of the rod 236 are shown by broken and solid lines.

Although various specific forms of brush spindles have been referred to above, this invention is not to be limited thereto. For example, treating surfaces other than brushes could be bettter suited for particular functions. High rate surface removal may call for abrasive particles embedded in a soft matrix. Also, it may be desirable to change the characteristics of the spindle treating surface along the axial length thereof, that is, the possibility of the upper portion of the spindle carrying soft rubber fingers, the central portion stiff bristles and the lower portion soft, polishing bristles. Still another possibility is illustrated in Fig. 38 which utilizes for the treating spindle 240 a soft, resilient cylinder 241 over which is sleeved and secured, meshed or loop interlocked flat, hard, non-round wire or ribbon 242, such as synthetic resin or stainless steel. The ribbon 242 will rapidly cut and clean the surface of produce while easily releasing the debris.

Still further, it is contemplated that combining varying relative speeds and/or diameters of adjacent spindles, especially in conjunction with variations in treating surface characteristics,, will produce a great selection of operating parameters from which to choose.

## CLAIMS

1.  . Apparatus for removing material from the surface of produce and separating the removed material from the resultant mixture of produce and removed material, said apparatus comprising a rotatable drum-like cage (4) with a vertical axis through which the produce (120) is fed, the periphery of the cage being defined at least in part by a plurality of rollers (6) disposed in an annular array and having surfaces adapted to remove material from the surface of the produce (120) and drive means (29,30) for rotating the cage (4) as a whole and the rollers (6) of the cage, characterised by a residence control member (20,130,136,146,152,162,164,172,177,182,186,222,225) provided within the cage, said member having an upper surface to resist and control the downward movement of produce (120) being treated through the cage (4) and increase the residence time of produce in the cage(4).

2.    Apparatus as claimed in claim 1 characterised in that the residence control member (20,136,146,152, 164,182,186,177,225) is separate from the rollers and by drive means  (133) to move the residence control member so as to lower the upper surface within the cage (4) in a controlled manner.

3.    Apparatus as claimed in claim 2 characterised in that the residence control member (20,136,146,152,164, 182,186,225) is an auger with flights.

4.    Apparatus as claimed in claim 3 characterised in that the flights of the auger (20,136,164,182,186, 225) have smooth upper surfaces.

5.    Apparatus as claimed in claim 3 characterised in that the auger (146,152,177) has brush flights.

6.    Apparatus as claimed in claim 5 characterised in that the brush flights of the auger (152) slope downwardly and outwardly.

7.    Apparatus as claimed in claim 2,3,4,5,or 6 characterised in that residence control member (20,136, 146,152,164,182,186,177,225) has a hollow shaft (22) adapted for the introduction of liquids into said cage (4).

8.    Apparatus as claimed in any one of claims 3 to 7 characterised in that the flights of the auger (182,186) are stepped.

9.    Apparatus as claimed in any preceding claim characterised in that the at least some of the surfaces of the rollers (6) are formed of bristles.

10.    Apparatus as claimed in any preceding claim characterised in that adjacent rollers (172,173,231, 232) rotate in opposite directions and define cavities between them and a bumper bar (176,236) is located to limit the depth of the cavities.

11. Apparatus as claimed in any preceding claim characterised in that at least some rollers (130,162, 173,222) have surfaces which are spiral in shape, and adjacent rollers rotate in the same or opposite rotational directions depending upon whether they are of the same or opposite hand, and in that the upper faces (135,172) of the spirals function as said residence time controlling member.

12. Apparatus as claimed in claim 1 or 2 characterised in that certain rollers are brushes and auger spindles (137) are located between adjacent pairs of brushes and comprise said residence control members.

13. A method of removing material from the surface of produce and separating the removed material from the resultant mixture of produce and removed material including the steps of urging said produce centrifugally into engagement with rollers disposed in an annular vertical array having surfaces adapted to remove material from the produce surfaces, and rotating the rollers independent of rotation of the array, characterised by the step of resisting and controlling the downward movements of produce within the array by means of a residence control member within the array which has an upper surface.

14. A method as claimed in claim 13 characterised in that the residence control member is separate from the rollers and is rotated relative to the array.

- 33 -

15. A method as claimed in claim 13 or 14,characterised in that the residence control member controls residence by brushing.

16. A method as claimed in claim 13,14 or 15 characterised by the step of rotating produce parallel to the roller direction of rotation.

17. A method as claimed in any one of claims 13 to 16 characterised by the step of capturing produce in an abrading pocket during part of its passage through the array.

**Fig.1.**

**Fig.8.**

**Fig. 37.**

**Fig.36.**

# Fig. 2.

Fig.3.

Fig.4.

**Fig.5.**

**Fig.10.**

**Fig.6.**

**Fig.7.**

**Fig.13.**

**Fig.14a.**

**Fig. 9.**

**Fig. 11.**

**Fig. 12.**

**Fig. 14b.**

**Fig. 14c.**

**Fig. 38.**

**Fig. 14d.**

**Fig.15.**

**Fig.16.**

**Fig.17.**

**Fig.18.**

**Fig. 19 a.**

**Fig. 20.**

**Fig. 23.**

**Fig. 21 a.**

**Fig. 22.**

# Fig. 24 b.

# Fig. 19 b.

# Fig. 19 c.

# Fig. 35.

**Fig. 19d.**

**Fig. 19e.**

**Fig. 21b.**

**Fig. 21c.**

**Fig. 30.**

200

**Fig. 31.**

201

209 **Fig. 34.**

**Fig. 32.**

206

205

**Fig. 24a.**

182

183

185

**Fig. 33.**

207 208

184

Fig. 25.

Fig. 26.

Fig. 27.

Fig. 28.

Fig. 29.

## DOCUMENTS CONSIDERED TO BE RELEVANT

| Category | Citation of document with indication, where appropriate, of relevant passages | Relevant to claim |
|---|---|---|
| D | US - A - 4 062 985 (JOHN H. AMSTAD) <br> * Whole document * <br> -- | 1,2,7, 13,14 |
| | US - A - 3 158 187 (DUANE E. SMITH) <br> * Column 3, line 59 - column 5, line 26; column 6, lines 35-44; column 7, line 43 - column 8, line 51 * <br> -- | 1,3-5, 7-9, 11,13, 14 |
| | US - A - 4 132 162 (ROBERT M. MAGNUSON) <br> * Whole document * <br> -- | 1-3,7, 9,13, 14 |
| | FR - A - 1 583 528 (KONSERVENFABRIK THIEDE GmbH) <br> * Page 4, line 27 - page 5, line 27 * <br> -- | 1-3 |
| A | DE - B - 1 299 161 (INSTITUUT VOOR BEWARING EN VERWERKING VAN LANDBOUWPRODUKTEN) | |
| A | US - A - 1 995 693 (WILLIAM E. URSCHEL) | |
| A | GB - A - 128 802 (JOHN ARTHUR MORAY) | |
| A | FR - A - 1 275 801 (SILVESTRE LOPEZ) | |
| A | DE - A - 2 042 822 (JACQUES ANDRE GUSTAVE GATINEAU) | |
| A | DE - A - 1 957 195 (ERNST REIMER) | |
| A | FR - A - 2 156 253 (MAGNUSON ENGINEERS, INC.) | |

----

### CLASSIFICATION OF THE APPLICATION (Int. Cl. 3)

A 23 N 7/02

### TECHNICAL FIELDS SEARCHED (Int.Cl. 3)

A 23 N

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-05-1980 | DE RUITER |

EPO Form 1503.1 06.78